# EUROPEAN PATENT SPECIFICATION

(11) **EP 3 499 922 B1**
(45) Date of publication and mention of the grant of the patent: **15.09.2021**
(21) Application number: 16912515.0
(22) Date of filing: 04.11.2016
(51) Int. Cl.: H04W 4/06, H04L 12/851, H04L 29/08, H04W 28/02, H04W 28/24

(54) **METHOD, DEVICE AND COMPUTER-READABLE STORAGE MEDIUM FOR APPLYING QOS BASED ON USER PLANE DATA MAPPING**
VERFAHREN, VORRICHTUNG UND COMPUTERLESBARES SPEICHERMEDIUM FÜR DIE ANWENDUNG VON QOS BASIEREND AUF DATEN-MAPPING AUF BENUTZEREBENE
PROCÉDÉ, DISPOSITIF ET SUPPORT DE STOCKAGE LISIBLE PAR ORDINATEUR POUR APPLIQUER LA QOS SUR LA BASE DE MAPPAGE DE DONNÉES DE PLAN D'UTILISATEUR

(30) Priority: 12.08.2016 CN 201610665025
(43) Date of publication of application: 19.06.2019
(73) Proprietor: ZTE Corporation, Shenzhen, Guangdong 518057 (CN)
(72) Inventor: HE, Qingchun, Shenzhen Guangdong 518057 (CN); HUANG, He, Shenzhen Guangdong 518057 (CN); SHI, Xiaojuan, Shenzhen Guangdong 518057 (CN); LI, Nan, Shenzhen Guangdong 518057 (CN)
(74) Representative: Aipex B.V.
(86) International application number: PCT/CN2016/104761
(87) International publication number: WO 2018/028061

(56) References cited:
- EP-A1- 2 843 992
- WO-A1-2016/091298
- CN-A- 102 025 732
- US-A1- 2013 114 446
- US-A1- 2014 126 454
- US-A1- 2015 003 435
- ZTE: "FURTHER DISCUSSION ON THE RAN QOS CONTROL", 3GPP TSG-RAN WG2 Meeting #94 R2-163746, 22 May 2016 (2016-05-22), XP051105157,

## Description

### TECHNICAL FIELD

The present invention relates to the field of communications and, in particular, to a method, apparatus and system for mapping user plane data and a storage medium.

### BACKGROUND

In the past few decades, mobile communication networks have developed continuously, from 2G, 3G to 4G. In this process, new communication devices, such as smart terminals and handheld tablet computers are emerging. The emergence of the new communication devices leads to a large number of new applications and new communication scenarios. Accordingly, the next generation/fifth generation (5G) mobile communication system will develop from the current human-centered communication to the Internet of Everything system that includes both interpersonal communication and inter-object communication.

To achieve Internet of Everything, the 5G system will use all possible networks. Therefore, in terms of mobile communication technologies, the 5G system is not a system that only uses one radio access technology, but a system that compatibly uses the existing radio access technology and newly designed radio access technologies, such as compatibly using the long term evaluation (LTE) access technology in 4G, a enhanced long term evaluation (eLTE) technology which is a further evaluation 4G, a wireless local area network (WLAN) technology, and the newly designed radio access technologies in 5G. A radio access network (RAN) (referred to as the access network) that adopts these different radio access technologies accesses to a unified core network in a flexible and pluggable manner.

To ensure scalability of the network, the 5G system needs to decouple a core network (CN) and the access network. That is, the core network and the access network may be evolved independently. When one of the core network and the access network is enhanced or changed, the other one of the core network and the access network does not need to be enhanced or changed synchronously. In other words, the core network in the 5G system needs to be designed to be insensitive to different radio access networks.

Regardless of the interpersonal communication or the inter-object communication, different application services and different application scenarios have corresponding requirements for Quality of Service (QoS) in the communication process. Ensuring a consistent QoS is an important factor that needs to be considered in the 5G system.

Currently, the minimum granularity of QoS management in LTE is the evolved packet system (EPS) bearer. A packet data network (PDN) connection corresponds to a default EPS bearer. In order to provide traffic with different QoS guarantees for UEs with the same IP address (PDN connection), dedicated bearers, in addition to EPS bearers, may be established. A mapping process between the traffic flow and the EPS bearer is as follows. After a policy and charging rules function (PCRF)/policy and charging enforcement function (PCEF) of the core network generates EPS bearer level QoS according to a QoS policy, a mobility management entity (MME) initiates establishment of an EPS bearer if the EPS bearer is not established. When the core network establishes the EPS bearer, the core network notifies the eNB of a QoS parameter of each E-RAB (i.e., a bearer of the EPS bearer on the E-URTAN side). The eNB correspondingly establishes an RB between the eNB and the UE on an air interface. The eNB determines the parameter configuration of the corresponding RB according to the received QoS parameter in the E-RAB granularity. The eNB and the UE perform data scheduling transmission according to the determined RB parameter configuration, and ensure the RB level QoS on the air interface.

The transmission method in the 3GPP system in which the core network and the access network are coupled and the QoS processing is performed using the bearer as granularity, apparently does not meet the design target of decoupling the core network and the access network in the future 5G system. To this end, more and more companies propose new QoS architectures, such as a QoS architecture based on per flow. In the QoS architecture based on per flow, there is no Radio Access Bearer (RAB) between the access network and the core network, while the RB and the logical channel are maintained on the access network side, so the access network needs to obtain QoS parameters in other manners to determine the parameters for establishing the RB and/or the LCH. Further, it needs to considered how the access network maps a data flow to the corresponding user plane lower-layer entity and/or RB and/or LCH after the access network receives the traffic flow from the core network, so that the access network protocol stack performs different priority scheduling processing on different traffic flows.

Therefore, in order to implement new QoS architectures of the 5G-NR, L2 protocol architectures need to be redesigned, L2 protocol functions need to be reallocated, and L2 functions need to be enhanced. In one of the possible design ideas, the function of "non-high processing time requirement" in the radio link control (RLC) layer and the function of the packet data convergence protocol (PDCP) layer are combined into one protocol sub-layer, while the function of "high processing time requirement" in the RLC layer may be combined with the function of the media access control (MAC) layer into one protocol sub-layer, or continue to be kept as an independent protocol sub-layer. Currently, the industry has only proposed the above design concept, and no specific scheme exists for mapping of the data packet under new QoS architectures. Further relevant technologies are also known from US 2015/003435 A1 (HORN GAVIN BERNARD [US] ET AL) 1 January 2015 which relates to techniques for enabling quality of service (QOS) on WLAN for traffic related to a bearer on cellular networks.

In the related art, no effective solution is proposed for solving the problem of lacking data packets mapping between user plane higher-layer devices and user plane lower-layer devices in the 5G system architecture.

### SUMMARY

Embodiments of the present invention provide a user plane data mapping method, apparatus and system and a storage medium, to at least solve the problem, in the related art, of lacking data packets mapping between user plane higher-layer entities and user plane lower-layer entities in the 5G system architecture. The above problem is solved by a method for mapping user plane data according to claim 1, an apparatus for mapping user plane data according to claim 5, and a computer-readable storage medium according to claim 9. Further embodiments of the invention are defined by the dependent claims.

Through the present invention, when the second network element delivers a data packet to the first network element, the data packet carries a specified identifier for indicating a user plane lower-layer entity corresponding to the data packet. The user plane higher-layer entity maps the data packet according to the specified identifier. Thus, the problem, in the related art, of lacking data packets mapping between the user plane higher-layer entity and the user plane lower-layer entity in the 5G system architecture is solved, and data packet mapping to the lower-layer entity is implemented by the user plane higher layer.

### BRIEF DESCRIPTION OF DRAWINGS

FIG. 1 is a flowchart of a method for mapping user plane data according to an embodiment of the present invention;
FIG. 2 is a schematic diagram illustrating two types of protocol stack architectures of a network element 1 according to a preferred embodiment of the present invention;
FIG. 3 is a schematic diagram illustrating a process of mapping a data packet in a network element according to a preferred embodiment of the present invention;
FIG. 4 is a schematic diagram of establishing a new data radio bearer according to a preferred embodiment of the present invention;
FIG. 5 is a schematic diagram of a format of a data packet according to a preferred embodiment of the present invention;
FIG. 6 is a schematic diagram of a method 1 for mapping a data packet in the network element 1 according to a preferred embodiment of the present invention;
FIG. 7 is a schematic diagram of a method 2 for mapping a data packet in the network element 1 according to a preferred embodiment of the present invention;
FIG. 8 is a flowchart of a method for processing user plane data according to a specific embodiment 1 of the present invention;
FIG. 9 is a structural block diagram of an apparatus, applied to a first network element, for mapping user plane data according to an embodiment of the present invention;
FIG. 10 is a schematic diagram of establishing a data radio bearer between a first network element and a third network element according to an embodiment of the present invention;
FIG. 11 is a schematic diagram illustrating a process of mapping a data packet by a third network element according to an embodiment of the present invention; and
FIG. 12 is a structural block diagram of an apparatus, applied to a third network element, for mapping user plane data according to an embodiment of the present invention.

### DETAILED DESCRIPTION

Hereinafter the present invention will be described in detail with reference to the drawings in conjunction with embodiments. It should be noted that if not in collision, the embodiments and features therein in the present application may be combined with each other.

It should be noted that the terms "first", "second" and the like in the description, claims and drawings of the present invention are used to distinguish between similar objects and are not necessarily used to describe a particular order or sequence.

### Embodiment 1

The embodiments described in the present application can be run in a new 5G system. The first network element is a device in the access network, and the second network element is a device in the core network.

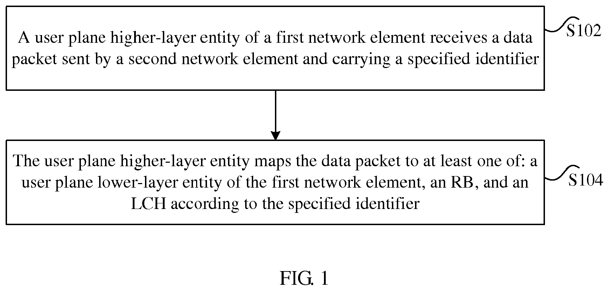

An embodiment of the present application provides a method for mapping user plane data. The method may be run on the above-mentioned system architecture. FIG. 1 is a flowchart of the method for mapping user plane data according to the embodiment of the present invention. As shown in FIG. 1, the method includes the steps described below.

In step S 102, a user plane higher-layer entity of a first network element receives a data packet, where the data packet is sent by a second network element and carries a specified identifier. In the embodiment, the specified identifier is set by the second network element.

In step S104, the user plane higher-layer entity maps the data packet to at least one of: the user plane lower-layer entity of the first network element, a radio bearer (RB), and a logical channel (LCH) according to the specified identifier.

With the steps of the method described above, the problem, in the related art, of a lack of data packet mapping between the user plane higher-layer entity and the user plane lower-layer entity in the 5G system architecture is solved, and mapping, by the user plane higher layer, of the data packet to the lower-layer entity and/or the RB, and/or the LCH is implemented.

In one embodiment, after the user plane higher-layer entity of the first network element receives the data packet sent by the second network element, the first network element establishes, according to the specified identifier, a mapping relationship between the specified identifier of the data packet and the radio bearer (RB) and/or the logical channel (LCH), and stores the mapping relationship in a mapping table; and the user plane higher-layer entity maps the data packet to at least one of: the user plane lower-layer entity of the first network element, the radio bearer (RB), and the logical channel (LCH) according to the mapping table. It should be noted that the radio bearer, the logical channel and the user plane lower-layer entity are in one-to-one-to-one correspondence.

In one embodiment, the user plane higher-layer entity of the first network element performs data transmission with the second network element through one of the following protocols: a GTP-U, an Internet Protocol (IP), and an IP-Sec tunneling protocol.

In one embodiment, the specified identifier includes one of: a QoS identifier (ID), a priority indicator (PRI); and a differentiated services code point (DSCP) of the IP.

In one embodiment, the user plane higher-layer entity includes one of: an independent entity above a user plane entity in an L2 protocol stack, and the user plane entity in the L2 protocol stack.

In one embodiment, the user plane lower-layer entity includes what is described below.

When the user plane higher-layer entity is the independent entity above the user plane entity in the L2 protocol stack, the user plane lower-layer entity includes one of: a PDCP entity, an RLC entity, and an MAC entity.

When the user plane higher-layer entity is a first user plane entity in the L2 protocol stack, the user plane lower-layer entity is a user plane entity other than the first user plane entity in the L2 protocol stack. The first user plane entity is one of: the PDCP entity, the RLC entity, and the MAC entity.

In one embodiment, the step in which the user plane higher-layer entity maps the data packet to at least one of: the user plane lower-layer entity of the first network element, the RB, and the logical channel LCH according to the specified identifier includes steps described below.

In response to receiving the data packet, the user plane higher-layer entity stores the data packet in a buffer.

In response to receiving a transmission indication from the user plane lower-layer entity, the user plane higher-layer entity maps the data packet to at least one of: the user plane lower-layer entity of the first network element, the RB, and the LCH. The transmission indication is used for indicating that a transmission opportunity exists between the user plane lower-layer entity and the user plane higher-layer entity.

Another embodiment of the present disclosure further provides a method for mapping user plane data. The method includes steps described below.

The second network element sends a data packet to the user plane higher-layer entity of the first network element, where the data packet carries a specified identifier set by the second network element. The user plane higher-layer entity maps the data packet to at least one of: a user plane lower-layer entity of the first network element, a radio bearer (RB) and a logical channel (LCH) according to the specified identifier.

In one embodiment, the second network element performs data transmission with the user plane higher-layer entity of the first network element through one of the following protocols: a GTP-U, an Internet Protocol (IP), and an IP-Sec tunneling protocol.

In one embodiment, the specified identifier includes one of: a QoS identifier (ID), a priority indicator (PRI); and a differentiated services code point (DSCP) of an IP.

The present invention will be described below in detail in conjunction with an alternative embodiment.

In the alternative embodiment of the present invention, a user plane higher-layer entity obtains a data packet from a preconfigured data channel, and maps the data packet to a user plane lower-layer entity and/or an RB and/or an LCH according to a preconfigured mapping rule.

The optional embodiment of the present invention provides a method for mapping user plane data. The method includes that: a user plane higher-layer entity of a network element 1 obtains a data packet from the preconfigured data channel, and maps the data packet to a user plane lower-layer entity of the network element 1 and/or the RB and/or the LCH according to the preconfigured mapping rule.

It should be noted that the network element 1 in the alternative embodiment is equivalent to the first network element in the above-mentioned embodiment, a network element 2 is equivalent to the second network element in the above-mentioned embodiment, and an identifier 1 is equivalent to the specified identifier in the above-mentioned embodiment.

The data channel is configured to transmit data between the user plane higher-layer entity of the network element 1 and the network element 2, and the data transmission may be implemented based on one of the following protocols: a GTP-U; an Internet Protocol (IP); and an IP-Sec tunneling protocol.

The network element 2 adds the prefix "identifier 1" to the data packet and then sends the data packet to the network element 1.

It should be noted that, in the present disclosure, the mapping rule is a mapping table that is saved locally by the network element 1 when the network element 1 establishes the RB and/or the LCH, and the mapping table is maintained by the user plane higher-layer entity.

The user plane higher-layer entity is either an independent entity above the L2 user plane entity, or a L2 entity (i.e., the PDCP entity or the RLC entity or the MAC entity) with enhanced function in the LTE protocol stack.

The user plane higher-layer entity maps the data packet to one and/or multiple user plane lower-layer entities and/or one and/or multiple RBs and/or one and/or multiple LCHs according to the mapping rule.

It should be noted that the user plane higher-layer entity includes, but is not limited to, a function of mapping a data packet from the data channel to one and/or multiple user plane lower-layer entities and/or one and/or multiple RBs and/or one and/or multiple LCHs.

The detailed steps of mapping by the user plane higher-layer entity may include two cases described below.

The user plane higher-layer entity maps the data packet to the user plane lower-layer entity and/or the RB and/or the LCH once obtaining the data packet from the preconfigured data channel.

Alternatively, the user plane higher-layer entity receives the data packet in the preconfigured data channel, places the data packet in a buffer, and maps the data packet to the user plane lower-layer entity and/or the RB and/or the LCH when the lower-layer entity has a transmission opportunity.

It should be noted that, in the present disclosure, the user plane lower-layer entity is relative to the user plane higher-layer entity, and is a protocol layer in the 5G-NR L2 protocol stack other than the user plane higher-layer entity.

The present invention is described below in conjunction with the specific implementation modes of the preferred embodiments of the present invention.

In the related art, according to relevant design concepts in the industry, in one possible L2 protocol stack reconfiguration design idea in the 5G era, the function of "non-high processing time requirement" in the RLC layer and the function of the PDCP layer are combined into one protocol sub-layer, and the function of "high processing time requirement" in the RLC layer may be combined with the function of the MAC layer into one protocol sub-layer, or be kept as an independent protocol sub-layer according to requirements.

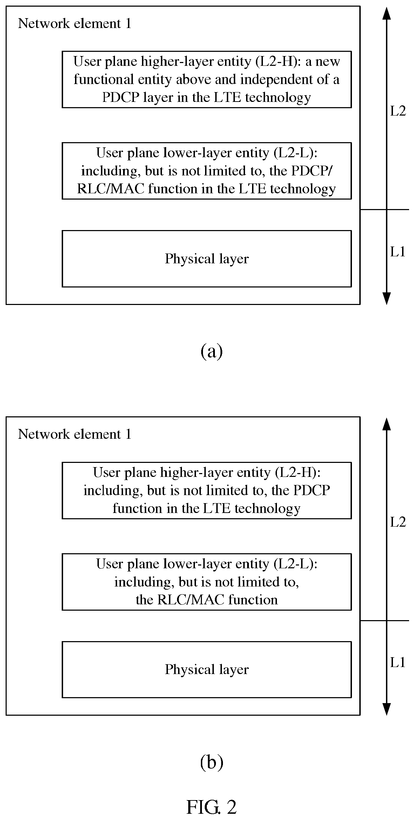

FIG. 2 is a schematic diagram illustrating two types of protocol stack architectures of the network element 1 according to a preferred embodiment of the present invention. In FIG. 2-(a), the L2 is described as two protocol sub-layers, namely the user plane higher-layer entity L2-high (abbreviated as L2-H) and the user plane lower-layer entity L2-Low (abbreviated as L2-L). The L2-H is a new independent functional entity above the PDCP layer in the LTE technology, and the L2-H maps the data packet in the preconfigured data channel to the user plane lower-layer entity (L2-L) according to the mapping rule. The L2-L includes, but is not limited to, the function of the PDCP layer, the function of the RLC layer, and the function of the MAC layer in the LTE technology. The PDCP/RLC/MAC layer in the L2-L may be divided into two and/or three sub-layers according to the reconfiguration design concept of the L2 protocol stack in 5G. In FIG. 2-(b), the L2 is described as two protocol sub-layers, namely the user plane higher-layer entity L2-high (abbreviated as L2-H) and the user plane lower-layer entity L2-Low (abbreviated as L2-L). The L2-H includes, but is not limited to, the PDCP layer in the LTE technology, and has a data packet mapping function. According to the mapping rule, the L2-H maps the data packet in the preconfigured data channel to the user plane lower-layer entity (L2-L), and maps a data packet in the layer L2-H to the RB and/or the LCH. The L2-L includes, but is not limited to, the function of the RLC layer and the function of the MAC layer in the LTE technology. The division manner of the L2 in FIG. 2 is only used to help explain the data packet mapping function of the user plane higher-layer entity, and the specific division scheme of the L2 is not limited.

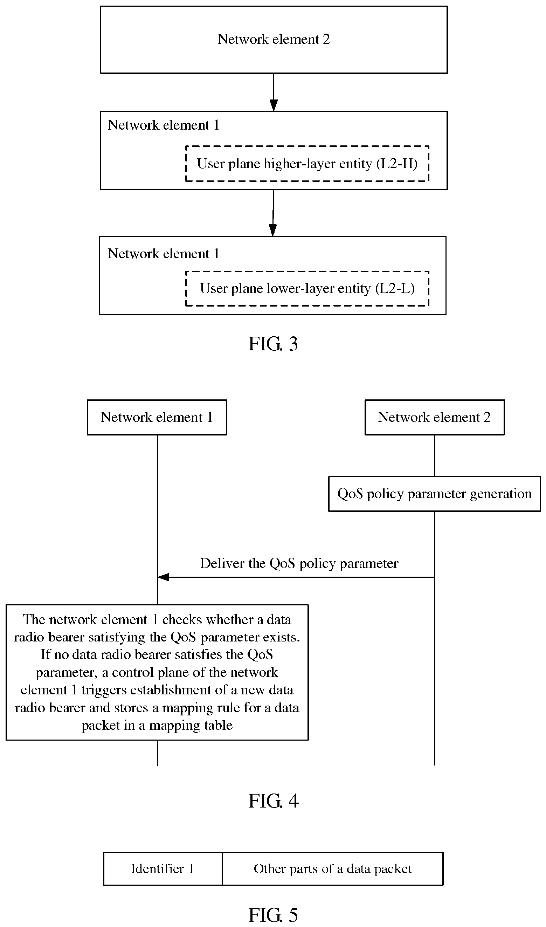

FIG. 3 is a schematic diagram illustrating a process of mapping a data packet in a network element according to the preferred embodiment of the present invention. The network element 2 is a core network of the 5G-NR, and includes a part or all of functional entities (e.g., a mobility management entity (MME), a policy control entity PCRF/PCEF, a packet data gateway (P-GW), and a serving gateway (S-GW)) of the LTE core network. The network element is defined to two parts: the user plane functional entity and the control plane functional entity. The data packet is marked with "identifier 1" in the network element 2 and then sent to the user plane higher-layer entity (L2-H) in the network element 1. A structure of the data packet after being marked with the "identifier 1" is as shown in FIG. 5. The user plane higher-layer entity (L2-H) in the network element 1 receives the data packet from the network element 2, and then maps the data packet to the user plane lower-layer entity and/or the RB and/or the LCH according to the preconfigured mapping rule. The mapping rule is a mapping table that is stored locally by the network element 1 when the network element 1 receives a QoS policy from the network element 2 and establishes the RB and/or the LCH. The mapping table reflects a mapping relationship between the "identifier 1" and the RB and/or the LCH. Table 1 shows a mapping table according to the preferred embodiment of the present invention. As shown in Table 1, the user plane higher-layer entity (L2-H) maps the data packet to the user plane lower-layer entity (L2-L) and/or the RB and/or the LCH according to the "identifier 1" in the data packet.

The method for mapping user plane data of the present invention is applied to the L2-H sub-layer in FIG. 2 and the L2-H sub-layer in FIG. 3, and the data packet in the preconfigured data channel is mapped to the user plane lower-layer entity and/or the RB and/or the LCH.

FIG. 4 is a schematic diagram of establishing a new data radio bearer according to the preferred embodiment of the present invention. In FIG. 4, the control functional entity of the network element 2 generates a QoS policy according to the data traffic type and sends the QoS policy to the control module in the network element 1. After receiving the QoS policy, the network element 1 first checks whether a data radio bearer that satisfies the QoS parameter exists on the network element 1 side. If this data radio bearer does not exist, the control module of the network element 1 establishes a new data radio bearer according to the QoS policy, and stores the mapping rule of the data packet in the mapping table.

FIG. 5 is a schematic diagram showing a format of a data packet according to the preferred embodiment of the present invention. As shown in FIG. 5, the data packet first passes through the network element 2, the network element 2 adds an "identifier 1" at the beginning of the data packet before sending the data packet to the network element 1. The "identifier 1" is a QoS ID or a priority indicator (PRI). Alternatively a DSCP of the IP header is directly used as the "identifier 1". The user plane higher-layer entity (L2-H) in the network element 1 maps the data packet to the user plane lower-layer entity (L2-L) and/or the RB and/or the LCH according to the "identifier 1".

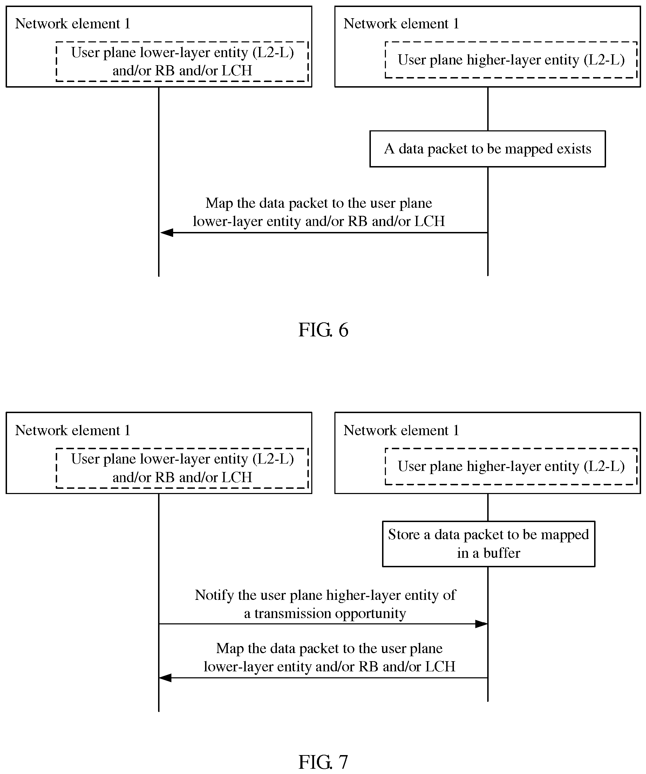

FIG. 6 is a schematic diagram of a method 1 for mapping a data packet in the network element 1 according to the preferred embodiment of the present invention. Once the data packet on the preconfigured data channel is obtained, the user plane higher-layer entity (L2-H) of the network element 1 selects a user plane lower-layer entity (L2-L) and/or a RB and/or an LCH satisfying the QoS parameter according to the preconfigured mapping rule for mapping the data packet to the L2-L and/or the RB and/or the LCH. The data channel is configured to transmit data between the user plane higher-layer entity of the network element 1 and the network element 2, and the data transmission may be implemented based on one of the following protocols: a GTP-U; an Internet Protocol (IP); and an IP-Sec tunneling protocol. The mapping rule is a mapping table that is stored locally by the network element 1 when the network element 1 establishes the RB and/or the LCH in response to receiving a QoS policy from the network element 2. The mapping table reflects a mapping relationship between the "identifier 1" and the RB and/or the LCH, as shown in Table 1. The data packet in the user plane higher-layer entity (L2-H) is from the network element 2, and the network element 2 adds the "identifier 1" in the header of the data packet. The "identifier 1" is a QoS ID or a priority indicator (PRI). Alternatively, a DSCP of the IP header is directly used as the "identifier 1". The structure of the data packet is shown in FIG. 5. The user plane higher-layer entity is an independent entity above the LTE PDCP or a function enhancement part of the PDCP entity in the LTE, and is configured to map the data packet that is from the network element 2 and attached with the "identifier 1" to the user plane lower-layer entity (L2-L) and/or the RB and/or the LCH satisfying the QoS parameter.

FIG. 7 is a schematic diagram of a method 2 for mapping a data packet in the network element 1 according to the preferred embodiment of the present invention. FIG. 7 shows a data mapping method different from that in FIG. 6. The data packet on the preconfigured data channel is obtained by the user plane higher-layer entity (L2-H) of the network element 1, and then is placed in the buffer to wait for a transmission opportunity of the user plane lower-layer entity (L2-L). When the user plane higher-layer entity (L2-H) receives notification of the transmission opportunity of the user plane lower-layer entity (L2-L), the user plane higher-layer entity (L2-H) maps the data packet to the user plane lower-layer entity (L2-L) and/or the RB and/or the LCH satisfying the QoS parameter according to the preconfigured mapping rule.

Table 1 is a mapping rule table stored locally by the network element 1 when the network element 1 establishes the RB and/or the LCH in response to receiving the QoS policy from the network element 2. The mapping table reflects the mapping relationship between the "identifier 1" and the RB and/or the LCH. The "identifier 1" and the RB ID/LCH ID are represented by simple numbers here only for better description of the mapping relationship between the "identifier 1" and the RB ID/LCH ID. The QCI, the GBR, the MBR and the ARP in the mapping table are optional items, and the optional items describe the specific parameters of QoS, as shown in Table 1.

**Table 1**

| "Identifier 1" | RB ID /LCI D | QCI | GBR | MBR | ARP |
|---|---|---|---|---|---|
| 1 | 1 | *** | *** | *** | *** |
| 2 | 2 | *** | *** | *** | *** |
| 3 | 3 | *** | *** | *** | *** |
| - | - | - | - | - | - |
| - | - | - | - | - | - |
| - | - | - | - | - | - |
| - | - | - | - | - | - |
| - | - | - | - | - | - |
| - | - | - | - | - | - |
| - | - | - | - | - | - |

### Specific embodiment 1

The specific embodiment 1 provides a method for mapping user plane data. The method is applied to a new QoS architecture in the 5G-NR and includes that: a user plane higher-layer entity of a network element 1 obtains a data packet from a preconfigured data channel, and maps the data packet to a user plane lower-layer entity of the network element 1 and/or the RB and/or the LCH according to a preconfigured mapping rule.

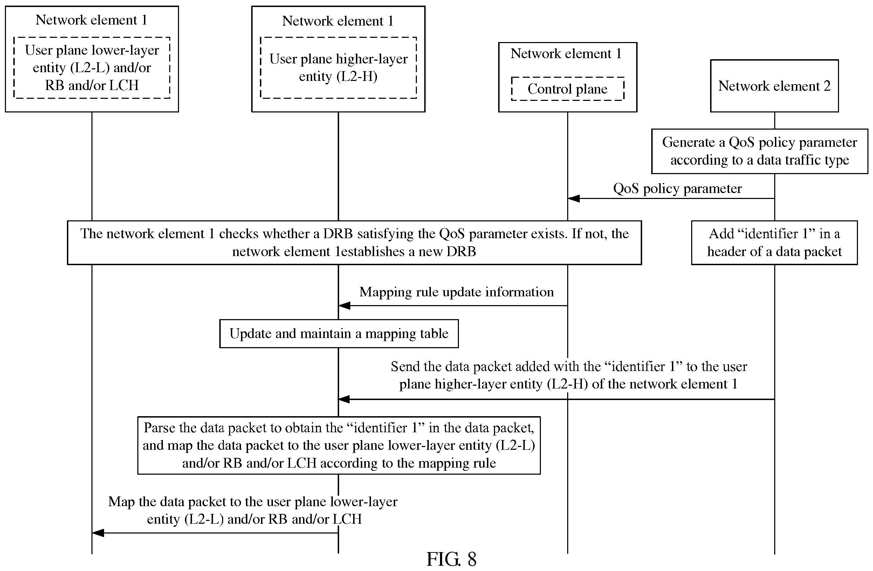

FIG. 8 is a flowchart of the method for processing user plane data according to the specific embodiment 1 of the present invention, and shows a detailed process of executing the method for processing user plane data by each part of the network element 1 and a network element 2.

The specific embodiment 1 includes the steps described below.

In a step 1, the network element 2 generates a QoS policy parameter according to the traffic type and sends the QoS policy to the network element 1.

The QoS policy is adding, deleting, and reconfiguring the QoS ID and the corresponding QoS parameter.

The QoS parameter includes the QCI, the GBR, the MBR and the ARP and the corresponding QoS ID, and is dynamically configured by the network element 2 to the network element 1.

The QoS ID is in one-to-one correspondence with a certain QoS parameter of the traffic flow. The QoS requirement for the data packet can be determined according to the QoS ID index in the data packet, that is, the data packet is mapped to the radio bearer and/or the user plane lower-layer entity (L2-L) and/or the RB and/or the LCH satisfying the QoS parameter requirement according to the QoS ID.

After receiving the QoS policy, the control module of the network element 1 first checks whether a data radio bearer (DRB) that satisfies the QoS parameter exists. If such a data radio bearer does not exist, the network element 1 establishes a new DRB. The network element 1 saves the mapping rule in the local mapping table when establishing this RB and/or the LCH. The mapping table reflects the mapping relationship between the "identifier 1" and the RB and/or the LCH and the QoS parameter, as shown in Table 1.

The "identifier 1" is a QoS ID, or a priority indicator (PRI), or a DSCP in the IP header.

The mapping table is maintained by the user plane higher-layer entity that updates the mapping relationship according to control plane signaling of the network element 1.

The user plane higher-layer entity (L2-H) maps the data packet to the user plane lower-layer entity (L2-L) and/or the RB and/or the LCH according to the mapping rule in the mapping table.

The user plane higher-layer entity (L2-H) is an independent entity above the PDCP layer in the LTE technology, or is a function enhanced part of the PDCP-layer entity in the LTE technology, and is configured to map the data packet, from the network element 2, tagged with the "identifier 1" to the user plane lower-layer entity (L2-L) and/or the RB and/or the LCH satisfying the QoS parameter and the priority requirements.

The functions of the user plane higher-layer entity (L2-H) include, but are not limited to, mapping the data packet to the user plane lower-layer entity (L2-L) and/or the RB and/or the LCH according to the preconfigured mapping rule.

The network element 1 is an access network of the 5G-NR, and includes two protocol contents, i.e., L2 and L1. For convenience of description, the L2 is divided into two sub-layers, i.e., L2-high (abbreviated as L2-H) and L2-Low (abbreviated as L2-L). The two sub-layers are shown in FIG. 2.

The network element 2 is a core network of the 5G-NR, and includes a part or all of functional entities (e.g., a mobility management entity (MME), a policy control entity PCRF/PCEF, a packet data gateway (P-GW), and a serving gateway (S-GW)) of the core network in LTE. The network element 2 is defined into two parts: the user plane functional entity and the control plane functional entity.

In a step 2, the network element 2 sends the data packet marked with the "identifier 1" to the user plane higher-layer entity of the network element 1.

The "identifier 1" is a QoS ID or a priority indicator (PRI). Alternatively, a DSCP in the IP header is directly used as the "identifier 1". The user plane higher-layer entity determines, according to the index of the "identifier 1", a user plane lower-layer entity (L2-L) and/or a RB and/or a LCH to which the data packet is sent.

The mapping relationship between the "identifier 1" and QoS parameters corresponding thereto and the RB and/or the LCH is stored in the mapping table, as shown in Table 1.

The user plane higher-layer entity parses the received data packet to obtain the "identifier 1" in the data packet, and maps the data packet to the user plane lower-layer entity (L2-L) and/or the RB and/or the LCH satisfying the QoS parameter according to the mapping rule in the mapping table.

The mapping rule is the mapping relationship between the "identifier 1" and the RB and/or the LCH. According to the "identifier 1", the user plane higher-layer entity looks for the mapping table, finds the RB and/or the LCH corresponding to the "identifier 1", and then maps the data packet carrying the "identifier 1" to the corresponding RB and/or LCH.

In a step 3, the user plane higher-layer entity maps the data packet to the user plane lower-layer entity (L2-L) and/or the RB and/or the LCH.

The user plane higher-layer entity maps the data packet to the user plane lower-layer entity and/or the RB and/or the LCH in response to obtaining the data packet from the preconfigured data channel.

Alternatively, the user plane higher-layer entity receives the data packet in the preconfigured data channel, places the data packet in a buffer, and maps the data packet to the user plane lower-layer entity and/or the RB and/or the LCH when the lower layer has a transmission opportunity.

The user plane lower-layer entity is named relative to the user plane higher-layer entity, and is a protocol layer, other than the user plane higher-layer entity herein, in the 5G-NR L2 protocol stack.

With the technical solution in the present application file, the traffic data flow in the preconfigured data channel is mapped to the user plane lower-layer entity and/or the RB and/or the LCH in the new QoS architecture.

Table 2 is a list of technical terms in the embodiments of the present invention. As shown in Table 2, the full names in Chinese and English of the technical terms used in the present disclosure are described.

**Table 2**

| 1. Abbreviation | 2. Full Name in English | 3. Chinese |
|---|---|---|
| 4. 5G | 5. Fifth Generation | 6. 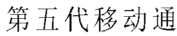 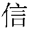 |
| 7. 5G-NR | 8. 5G New Radio/Rat | 9. 5G 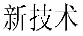 |
| 10. MME | 11. Mobility Management Entity | 12. 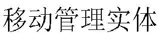 |
| 13. P-GW | 14. PDN Gateway | 15. PDN 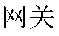 |
| 16. S-GW | 17. Serving Gateway | 18. 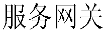 |
| 19. PDN | 20. Packet Data Network | 21. 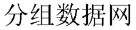 |
| 22. PCRF | 23. Policy and Charging Rules Function | 24. 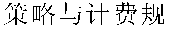 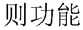 |
| 25. PCEF | 26. Policy and Charging Enforcement Function | 27. 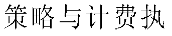 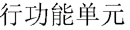 |
| 28. EPS | 29. Evolved Packet System | 30. 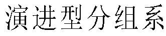 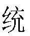 |
| 31. E-RAB | 32. E-UTRAN Radio Access Bearer | 33. E-UTRAN 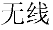 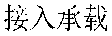 |
| 34. PDCP | 35. Packet Data Convergence Protocol | 36. 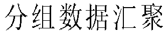 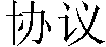 |
| 37. RLC | 38. Radio Link Control | 39. 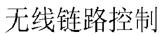 |
| 40. LTE | 41. Long Term Evolution | 42. 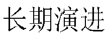 |
| 43. DRB | 44. Data Radio Bearer | 45. 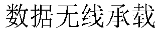 |
| 46. LCH | 47. Logical Channel | 48. 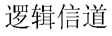 |
| 49. LCID | 50. Logical Channel Identifier | 51. 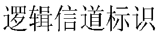 |
| 52. QoS | 53. Quality of Service | 54. 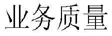 |
| 55. QCI | 56. QoS Class Identifier | 57. QoS 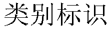 |
| 58. ARQ | 59. Automatic Repeat reQuest | 60. 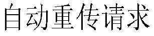 |
| 61. UE | 62. User Equipment | 63. 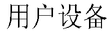 |
| 64. RAB | 65. Radio Access Bearer | 66. 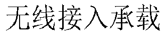 |
| 67. GBR | 68. Guaranteed Bit Rate | 69. 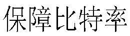 |
| 70. MBR | 71. Maximum Bit Rate | 72. 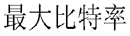 |
| 73. ARP | 74. Allocation and Retention Priority | 75. 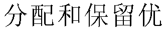 |
| 76. IP | 77. Internet Protocol | 78. 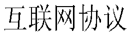 |
| 79. DSCP | 80. Differentiated Services Code Point | 81. 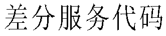 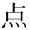 |

From the description of the embodiments described above, it will be apparent to those skilled in the art that the method in the embodiments described above may be implemented by software plus a necessary general-purpose hardware platform, or may of course be implemented by hardware. However, in many cases, the former is a preferred implementation mode. Based on this understanding, the solution provided by the present invention substantially, or the part contributing to the related art, may be embodied in the form of a software product. The computer software product is stored in a storage medium (such as a read-only memory (ROM)/random access memory (RAM), a magnetic disk or an optical disk) and includes several instructions for enabling a terminal device (which may be a mobile phone, a computer, a server, a network device, etc.) to execute the method according to each embodiment of the present disclosure.

### Embodiment 2

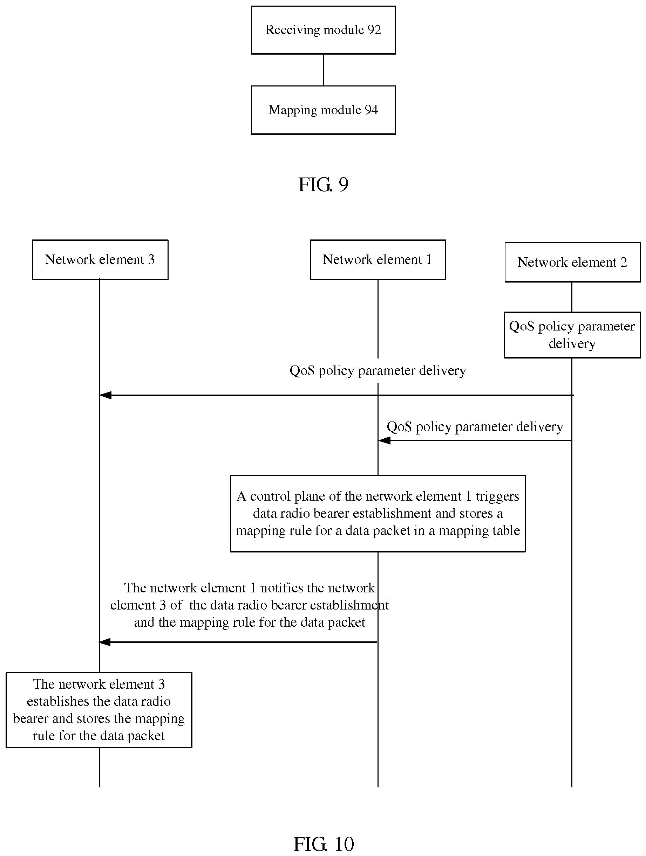

FIG. 9 is a structural block diagram of an apparatus, applied to a first network element, for mapping user plane data according to the embodiment of the present invention. As shown in FIG. 9, the apparatus includes: a receiving module 92 and a mapping module 94.

The receiving module 92 is configured to receive, through a user plane higher-layer entity of the first network element, a data packet that is sent by a second network element and carries a specified identifier.

The mapping module 94 is connected to the receiving module 92 and is configured to map the data packet to at least one of: a user plane lower-layer entity of the first network element, a radio bearer (RB), and a logical channel (LCH) according to the specified identifier.

In one embodiment, after the user plane higher-layer entity of the first network element receives the data packet sent by the second network element, the receiving module 92 is further configured to establish a mapping relationship between the specified identifier of the data packet and the radio bearer (RB) and/or the logical channel (LCH), and store the mapping relationship in a mapping table.

The receiving module 92 is further configured to map, through the user plane higher-layer entity, the data packet to at least one of: the user plane lower-layer entity of the first network element, the radio bearer (RB), and the logical channel (LCH) according to the mapping table.

In one embodiment, the user plane higher-layer entity of the first network element performs data transmission with the second network element through one of the following protocols:
a GTP-U; an Internet Protocol (IP); and an IP-Sec tunneling protocol.

In one embodiment, the specified identifier includes one of:
a QoS identifier (ID); a priority indicator (PRI); and a differentiated services code point (DSCP) in a IP header.

In one embodiment, the user plane higher-layer entity includes:
an independent entity above a user plane entity in an L2 protocol stack; and
the user plane entity in the L2 protocol stack.

In one embodiment, the user plane lower-layer entity includes what is described below.

When the user plane higher-layer entity is the independent entity above the user plane entity in the L2 protocol stack, the user plane lower-layer entity includes one of: a PDCP entity, an RLC entity, and an MAC entity.

When the user plane higher-layer entity is a first user plane entity in the L2 protocol stack, the user plane lower-layer entity is a user plane entity in the L2 protocol stack other than the first user plane entity. The first user plane entity is one of: the PDCP entity, the RLC entity, and the MAC entity.

In one embodiment, after the user plane higher-layer entity receives the data packet, the mapping module 94 is further configured to store the data packet in a buffer.

After receiving a transmission indication from the user plane lower-layer entity, the mapping module 94 is further configured to map, through the user plane higher-layer entity, the data packet to at least one of: the user plane lower-layer entity of the first network element, the RB, and the LCH. The transmission indication is used for indicating that a transmission opportunity exists between the user plane lower-layer entity and the user plane higher-layer entity.

Another embodiment of the present disclosure provides an apparatus for mapping user plane data. The apparatus is applied to a second network element and includes a sending module.

The sending module is configured to send a data packet to the user plane higher-layer entity of the first network element, where the data packet carries a specified identifier set by the second network element. The user plane higher-layer entity maps the data packet to at least one of: a user plane lower-layer entity of the first network element, a radio bearer (RB) and a logical channel (LCH) according to the specified identifier.

In one embodiment, the second network element performs data transmission with the user plane higher-layer entity of the first network element through one of the following protocols:
a GTP-U; an Internet Protocol (IP); and an IP-Sec tunneling protocol.

In one embodiment, the specified identifier includes one of:
a QoS identifier (ID); a priority indicator (PRI); and a differentiated services code point (DSCP) in an IP header.

Another embodiment of the present disclosure further provides a storage medium. The storage medium is configured to store program codes for executing the steps described below.

The user plane higher-layer entity of the first network element receives a data packet that is sent by the second network element and carries a specified identifier.

The user plane higher-layer entity maps the data packet to at least one of: the user plane lower-layer entity of the first network element, a radio bearer (RB), and a logical channel (LCH) according to the specified identifier.

In one embodiment, the storage medium is further configured to store program codes for executing the steps described below.

The second network element sends a data packet to the user plane higher-layer entity of the first network element, where the data packet carries a specified identifier set by the second network element. The user plane higher-layer entity maps the data packet to at least one of: a user plane lower-layer entity of the first network element, a radio bearer (RB) and a logical channel (LCH) according to the specified identifier.

It should be noted that the various modules described above may be implemented by software or hardware. Implementation by hardware may, but may not necessarily, be performed in the following manner: the various modules described above are located in a same processor, or the various modules described above are located in their respective processors in any combination form.

### Embodiment 3

Another embodiment of the present disclosure further provides a system for mapping user plane data. The system includes: a first network element and a second network element. The first network element includes: a user plane higher-layer entity and a user plane lower-layer entity.

The user plane higher-layer entity of the first network element receives a data packet, where the data packet is sent by the second network element and carries a specified identifier.

The user plane higher-layer entity maps the data packet to at least one of: the user plane lower-layer entity of the first network element, a radio bearer (RB), and a logical channel (LCH) according to the specified identifier.

In one embodiment, after the user plane higher-layer entity of the first network element receives the data packet sent by the second network element, the system is further configured as follows.

The first network element establishes a mapping relationship between the specified identifier of the data packet and the radio bearer (RB) and/or the logical channel (LCH), and stores the mapping relationship in a mapping table.

The user plane higher-layer entity maps the data packet to at least one of: the user plane lower-layer entity of the first network element, a radio bearer (RB), and a logical channel (LCH) according to the mapping table.

In one embodiment, the user plane higher-layer entity of the first network element performs data transmission with the second network element through one of the following protocols:
a GTP-U; an Internet Protocol (IP); and an IP-Sec tunneling protocol.

In one embodiment, the specified identifier includes one of:
a QoS identifier (ID); a priority indicator (PRI); and a differentiated services code point (DSCP) of an IP header.

In one embodiment, the user plane higher-layer entity includes:
an independent entity above a user plane entity in an L2 protocol stack; and
the user plane entity in the L2 protocol stack.

In one embodiment, the user plane lower-layer entity is described below.

When the user plane higher-layer entity is the independent entity above the user plane entity in the L2 protocol stack, the user plane lower-layer entity includes one of: a PDCP entity, an RLC entity, and an MAC entity.

When the user plane higher-layer entity is a first user plane entity in the L2 protocol stack, the user plane lower-layer entity is a user plane entity other than the first user plane entity in the L2 protocol stack. The first user plane entity is one of: the PDCP entity, the RLC entity, and the MAC entity.

In one embodiment, the step in which the user plane higher-layer entity maps the data packet to at least one of: the user plane lower-layer entity of the first network element, a radio bearer (RB), and a logical channel (LCH) according to the specified identifier includes steps described below.

After the user plane higher-layer entity receives the data packet, the user plane higher-layer entity stores the data packet in a buffer.

The user plane lower-layer entity sends a transmission indication to the user plane higher-layer entity. The transmission indication is used for indicating that a transmission opportunity exists between the user plane lower-layer entity and the user plane higher-layer entity.

The user plane higher-layer entity maps the data packet to at least one of: the user plane lower-layer entity of the first network element, a radio bearer (RB), and a logical channel (LCH).

### Embodiment 4

An embodiment of the present invention further provides a storage medium. Alternatively, in the embodiment, the storage medium may be configured to store program codes for executing the steps described below.

In a step S1, the user plane higher-layer entity of the first network element receives a data packet sent by the second network element and carrying a specified identifier.

In a step S2, the user plane higher-layer entity maps the data packet to at least one of: the user plane lower-layer entity of the first network element, a radio bearer (RB), and a logical channel (LCH) according to the specified identifier.

In one embodiment, the storage medium is further configured to store program codes for executing the steps described below.

In a step S3, the second network element sends a data packet to the user plane higher-layer entity of the first network element, where the data packet carries a specified identifier.

In a step S4, the user plane higher-layer entity maps the data packet to at least one of: the user plane lower-layer entity of the first network element, the radio bearer (RB), and the logical channel (LCH) according to the specified identifier.

Alternatively, in the embodiment, the storage medium may include, but is not limited to, a USB flash disk, a read-only memory (ROM), a random access memory (RAM), a mobile hard disk, a magnetic disk, an optical disk or another medium capable of storing program codes.

Alternatively, in the embodiment, a processor executes the steps in the methods described in the above embodiments according to the program codes stored in the storage medium.

Alternatively, for specific examples in the embodiment, reference may be made to the examples described in the above-mentioned embodiments and optional embodiments, and repetition will not be made herein.

### Embodiment 5

In the embodiments described above, the first network element is a device in the access network, such as a base station. In addition, the present invention further provides a third network element. The third network element is a terminal running in a 5G new system. The third network element may communicate with the first network element via an air interface, or may communicate with the second network element via the first network element. The third network element may be various user equipments, such as a mobile phone, a computer, a tablet device and so on.

The third network element communicates with the first network element via the air interface, and serves as the communication peer of the first network element on the wireless interface. The two protocol stack architectures shown in FIG. 2 are also applicable to the third network element, and the third network element adopts a protocol stack architecture corresponding to the first network element.

FIG. 10 is a schematic diagram of establishing a data radio bearer between the first network element and the third network element according to a preferred embodiment of the present invention. As shown in FIG. 10, the control functional entity of the second network element generates a QoS policy according to the data traffic type, and the second network element delivers the generated QoS policy parameter to the third network element. The QoS policy parameter delivered to the third network element includes: a QoS parameter and a priority of the QoS parameter. Preferably, the QoS policy parameter may further include: the data packet filter/data traffic filter using the QoS parameter. The QoS parameter includes a QoS ID for identifying or indicating the QoS parameter, and may further include any one or more of a MBR, a GBR, a priority level, a packet delay budget (PDB), a packet error rate (PER) and admission control. The second network element delivers the generated QoS policy parameter to the first network element, where the QoS policy parameter delivered to the first network element may include all the parameters delivered to the third network element, or may include only the QoS policy parameter. After the first network element receives the QoS policy parameter from the second network element, the control plane of the first network element triggers the establishment of the data radio bearer, and saves the mapping rule of the data packet in the mapping table. Specifically, the saved mapping rule for the data packet may record a mapping relationship between the QoS ID and the user plane lower-layer entity and/or the DRB and/or the LCH. Then, the first network element notifies the third network element to establish the data radio bearer initiated by the first network element, and notifies the third network element of the mapping rule of the data packet, where the first network element notifies the third network element of only a mapping rule for the data packet used for uplink transmission. After receiving the mapping rule, the third network element establishes the data radio bearer, and saves the mapping rule of the data notified by the first network element.

The radio bearer process shown in Fig. 10 has the following features.
(1) The QoS policy parameter sent by the second network element to the third network element includes a default QoS policy parameter. A value of the QoS ID in the default QoS policy parameter used for identifying or indicating the QoS parameter is different from a value of the QoS ID for identifying or indicating the QoS parameter of the non-default QoS policy parameter.
(2) After receiving the QoS policy parameter from the second network element, the first network element establishes the data radio bearer. The first network element does not necessarily establish data radio bearers for all the received QoS parameters. That is, a QoS parameter received by the first network element from the second network element is not necessarily mapped to a data radio bearer. Therefore, not QoS IDs of all QoS parameters received by the first network element from the second network element have mapping relationships with the user plane lower-layer entities and/or DRBs and/or LCHs in the above-mentioned mapping rule. The first network element decides establishing data radio bearers for which QoS parameters and mapping which QoS parameters to which user plane lower-layer entities and/or which DRBs and/or the LCHs, and which user plane lower-layer entities.
(3) After receiving the QoS policy parameter from the second network element, the first network element establishes the data radio bearer, and the established data radio bearer includes at least: a default DRB. The user plane lower-layer entity/LCH used by the default DRB is called a default user plane lower-layer entity/default LCH.

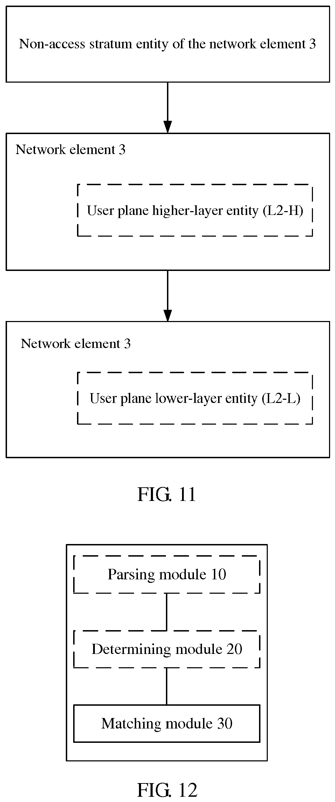

After receiving the mapping rule of the data packet as shown in FIG. 10, the third network element performs the data packet mapping process described below when the third network element needs to send data to the first network element. FIG. 11 is a schematic diagram illustrating the data packet mapping process executed by the third network element according to the embodiment of the present invention. The non-access stratum entity of the third network element is a protocol entity (as shown in FIG. 3) located above the user plane higher-layer entity of the third network element. The non-access stratum entity can implement end-to-end communication with the second network element. As shown in FIG. 10, the QoS policy parameter set received by the third network element from the second network element is received and saved by the non-access stratum entity of the third network element. After the non-access stratum entity of the third network element receives a data packet from the upper layer, such as the application layer, the non-access stratum entity of the third network element parses the data packet to obtain the data packet filter/data traffic filter in the data packet, and then matches the obtained data packet filter/data traffic filter with each QoS policy parameter in the saved QoS policy parameter set received from the first network element. After successful matching, the non-access stratum of the third network element determines the QoS parameter to be used by the data packet, and then sends the QoS ID for identifying or indicating this QoS parameter to the user plane higher-layer entity (L2-H) of the third network element. After receiving the QoS ID from the non-access stratum, the user plane higher-layer entity matches the QoS ID to the mapping rule for the data packet stored in the third network element, such as the mapping relationship between the QoS ID and the user plane lower-layer entity and/or the DRB and/or the LCH. Upon successfully matching the QoS ID with a corresponding user plane lower-layer entity and/or the DRB and/or the LCH, the user plane higher-layer entity transmits the data packet to the matched user plane lower-layer entity, and/or the matched DRB, and/or the matched LCH, and puts the QoS ID into a PDU when the data packet is grouped to generate the PDU. Upon failing to match the QoS ID with any user plane lower-layer entity and/or the DRB and/or the LCH, that is, upon determining that the QoS ID is not in the mapping rule for the data packet, the user plane higher-layer entity transmits the data packet to the default user plane lower-layer entity and/or the default DRB and/or the default LCH, and puts the QoS ID into the PDU when the packet is grouped to generate the PDU. Accordingly, after the data packet is sent to the first network element via the air interface, the user plane higher-layer entity of the first network element determines that the PDU of the QoS ID (not the default QoS ID) is received at the default user plane lower-layer entity and/or on the default DRB and/or on the default LCH, and may establish a DRB for the QoS parameter identified or indicated by the QoS ID or may map the QoS parameter identified or indicated by the QoS ID to the established non-default DRB.

### Embodiment 6

The embodiment of the present invention provides an apparatus, applied to a third network element, for mapping user plane data. A structural diagram of the mapping apparatus is as shown in FIG. 12. The apparatus includes a matching module 30.

The matching module 30 is configured to obtain a QoS identifier (ID) for identifying a QoS parameter, match the QoS ID with a stored mapping rule, upon successful matching of the QoS ID with the stored mapping rule, constructa data packet and transmit the constructed data packet to a matched user plane lower-layer entity, and/or matched DRB, and/or matched LCH; and upon unsuccessful matching of the QoS ID with the stored mapping rule, construct the data packet and transmit the constructed data packet to a default user plane lower-layer entity, and/or default DRB, and/or default LCH.

In the solution described above, the apparatus further includes a parsing module 10 and a determining module 20.

The parsing module 10 is configured to receive the data packet, and obtain a data packet filter or a data traffic filter from the data packet.

The determining module 20 is configured to determine the QoS parameter corresponding to the data packet based on the data packet filter or the data traffic filter and a stored QoS policy parameter, and transmit the QoS ID for identifying the QoS parameter to the matching module.

In the solution described above, the determining module 20 is configured to receive and save a QoS policy parameter set, and match the data packet filter or the data traffic filter with each QoS policy parameter in the QoS policy parameter set to obtain the QoS policy parameter applied to the data packet.

In the solution described above, the QoS ID is constructed to the data packet when being constructed by the matching module 30.

The receiving module, the mapping module, the sending module, the parsing module, the determining module, and the matching module in the apparatus for mapping user plane data provided in the embodiments of the present invention may all be implemented by a processor, and may, of course, also be implemented by a specific logic circuit. The processor may be on a network element. In practical applications, the processor may be a central processing unit (CPU), a microprocessor unit (MPU), a digital signal processor (DSP), a field programmable gate array (FPGA), or the like.

In the embodiments of the present invention, the methods for mapping user plane data, if implemented in the form of software function modules and sold or used as independent products, may also be stored in a computer-readable storage medium. Based on this understanding, the technical solutions provided by the embodiments of the present invention substantially, or the part contributing to the existing art, may be embodied in the form of software products. The software products are stored in a storage medium and includes several instructions for enabling a computer device (which may be a personal computer, a server or a network device) to execute all or part of the methods provided by the embodiments of the present invention. The foregoing storage medium may be a USB flash disk, a mobile hard disk, a read only memory (ROM), a magnetic disk, an optical disk or another medium capable of storing program codes. In this way, the embodiments of the present invention are not limited to any specific combination of hardware and software.

Accordingly, the embodiment of the present invention further provides a computer-readable storage medium. The computer-readable storage medium stores computer programs which are used for executing the above-mentioned methods for mapping user plane data provided by the embodiments of the present invention.

Apparently, it should be understood by those skilled in the art that each of the above-mentioned modules or steps of the present invention may be implemented by a general-purpose computing apparatus, the modules or steps may be concentrated on a single computing apparatus or distributed on a network composed of multiple computing apparatuses, and alternatively, the modules or steps may be implemented by program codes executable by the computing apparatuses, so that the modules or steps may be stored in a storage apparatus and executed by the computing apparatuses. In some circumstances, the illustrated or described steps may be executed in sequences different from those described herein, or the modules or steps may be made into various integrated circuit modules separately, or multiple modules or steps therein may be made into a single integrated circuit module for implementation. In this way, the present invention is not limited to any specific combination of hardware and software.

The above are only preferred embodiments of the present invention and are not intended to limit the present invention, of which the scope is defined by the appended claims.

## Claims

1. A method for mapping user plane data, comprising:
obtaining, by a user plane higher-layer entity of a user equipment, a Quality of Service, QoS, identifier, ID, from a non-access stratum entity of the user equipment, wherein the QoS ID is used for identifying a QoS parameter of a data packet;
matching, by the user plane higher-layer entity, the QoS ID with a stored mapping rule, wherein the mapping rule records a mapping relationship between the QoS ID and a user plane lower-layer entity of the user equipment;
upon successful matching of the QoS ID with the stored mapping rule, constructing, by the user plane higher-layer entity, a Protocol Data Unit, PDU containing the data packet and transmitting the constructed PDU to a matched user plane lower-layer entity; and
upon unsuccessful matching of the QoS ID with the stored mapping rule, constructing, by the user plane higher-layer entity, the PDU and transmitting the constructed PDU to a default user plane lower-layer entity;
wherein the user plane higher-layer entity is an independent entity above a Packet Data Convergence Protocol, PDCP, entity, and the user plane lower-layer entity is the PDCP entity.

2. The method of claim 1, wherein before obtaining, by the user plane higher-layer entity of the user equipment, the QoS ID from the non-access stratum entity of the user equipment, the method further comprises:
receiving, by the non-access stratum entity, the data packet, and obtaining a data packet filter from the data packet; and
determining, by the non-access stratum entity, the QoS parameter corresponding to the data packet based on the data packet filter and a stored QoS policy parameter, and transmitting the QoS ID for identifying the QoS parameter to the user plane higher-layer entity.

3. The method of claim 2, wherein the determining, by the non-access stratum entity, the QoS parameter corresponding to the data packet based on the data packet filter and the stored QoS policy parameter comprises:
receiving and saving, by the non-access stratum entity, a QoS policy parameter set; and
matching, by the non-access stratum entity, the data packet filter with each QoS policy parameter in the QoS policy parameter set to obtain the QoS policy parameter applied to the data packet.

4. The method of claim 1 or 2, wherein the PDU is constructed with the QoS ID by the user plane higher-layer entity.

5. A user plane higher-layer entity of a user equipment for mapping user plane data, said user plane higher-layer entity comprising a matching module (30),
wherein the matching module (30) is configured to obtain a Quality of Service, QoS, identifier, ID, from a non-access stratum entity of the user equipment, wherein the QoS ID is used for identifying a QoS parameter of a data packet, match the QoS ID with a stored mapping rule, wherein the mapping rule records a mapping relationship between the QoS ID and a user plane lower-layer entity of the user equipment, upon successful matching of the QoS ID with the stored mapping rule, construct a Protocol Data Unit, PDU containing the data packet and transmit the constructed PDU to a matched user plane lower-layer entity; and upon unsuccessful matching of the QoS ID with the stored mapping rule, construct the PDU and transmit the constructed PDU to a default user plane lower-layer entity;
wherein the user plane higher-layer entity is an independent entity above a Packet Data Convergence Protocol, PDCP, entity, and the user plane lower-layer entity is the PDCP entity.

6. The user plane higher-layer entity of claim 5, further comprising: a parsing module (10) and a determining module (20), wherein
the parsing module (10) is configured to receive the data packet, and obtain a data packet filter from the data packet; and
the determining module (20) is configured to determine the QoS parameter corresponding to the data packet based on the data packet filter and a stored QoS policy parameter, and transmit the QoS ID for identifying the QoS parameter to the matching module (30).

7. The user plane higher-layer entity of claim 6, wherein the determining module (20) is configured to receive and save a QoS policy parameter set; and match the data packet filter with each QoS policy parameter in the QoS policy parameter set to obtain the QoS policy parameter applied to the data packet.

8. The user plane higher-layer entity of claim 5 or 6, wherein the PDU is constructed with the QoS ID by the matching module (30).

9. A computer-readable storage medium, storing computer-executable instructions, wherein the computer-executable instructions are used for executing mapping user plane data of any one of claims 1 to 4.

## Patentansprüche

1. Verfahren zum Daten-Mapping auf Benutzerebene, umfassend:
Erhalten einer Kennung (ID) einer Dienstqualität (QoS) durch eine Einheit einer höheren Schicht auf Benutzerebene eines Benutzergeräts von einer Nichtzugriffs-Zwischenschichteinheit des Benutzergeräts, wobei die Qos-ID zum Identifizieren eines QoS-Parameters eines Datenpakets verwendet wird;
Abgleichen der QoS-ID mit einer gespeicherten Mapping-Regel durch die Einheit einer höheren Schicht auf Benutzerebene, wobei die Mapping-Regel eine Mapping-Beziehung zwischen der QoS-ID und einer Einheit einer niedrigeren Schicht auf Benutzerebene des Benutzergeräts aufzeichnet;
bei erfolgreichem Abgleichen der QoS-ID mit der gespeicherten Mapping-Regel, Erstellen einer Protokolldateneinheit (PDU), die das Datenpaket enthält, durch die Einheit einer höheren Schicht auf Benutzerebene und Übertragen der erstellten PDU an eine abgeglichene Einheit einer niedrigeren Schicht auf Benutzerebene; und
bei erfolglosem Abgleichen der QoS-ID mit der gespeicherten Mapping-Regel, Erstellen der PDU durch die Einheit einer höheren Schicht auf Benutzerebene und Übertragen der erstellten PDU an eine standardmäßige Einheit einer niedrigeren Schicht auf Benutzerebene;
wobei die Einheit einer höheren Schicht auf Benutzerebene eine unabhängige Einheit über einer Einheit des Paketdatenkonvergenzprotokolls (PDCP) ist und die Einheit einer niedrigeren Schicht auf Benutzerebene die PDCP-Einheit ist.

2. Verfahren nach Anspruch 1, wobei das Verfahren vor dem Erhalten der QoS-ID von der Nichtzugriffs-Zwischenschichteinheit des Benutzergeräts durch die Einheit einer höheren Schicht auf Benutzerebene des Benutzergeräts ferner Folgendes umfasst:
Empfangen des Datenpakets durch die Nichtzugriffs-Zwischenschichteinheit und Erhalten eines Datenpaketfilters aus dem Datenpaket; und
Bestimmen des QoS-Parameters, der dem Datenpaket entspricht, auf Grundlage des Datenpaketfilters und eines gespeicherten QoS-Richtlinienparameters durch die Nichtzugriffs-Zwischenschichteinheit und Übertragen der QoS-ID zum Identifizieren des QoS-Parameters an die Einheit einer höheren Schicht auf Benutzerebene.

3. Verfahren nach Anspruch 2, wobei das Bestimmen des QoS-Parameters, der dem Datenpaket entspricht, auf Grundlage des Datenpaketfilters und des gespeicherten QoS-Richtlinienparameters durch die Nichtzugriffs-Zwischenschichteinheit Folgendes umfasst:
Empfangen und Sichern eines QoS-Richtlinienparametersatzes durch die Nichtzugriffs-Zwischenschichteinheit; und
Abgleichen des Datenpaketfilters mit jedem QoS-Richtlinienparameter in dem QoS-Richtlinienparametersatz durch die Nichtzugriffs-Zwischenschichteinheit, um den auf das Datenpaket angewendeten QoS-Richtlinienparameter zu erhalten.

4. Verfahren nach Anspruch 1 oder 2, wobei die PDU mit der QoS-ID durch die Einheit einer höheren Schicht auf Benutzerebene erstellt wird.

5. Einheit einer höheren Schicht auf Benutzerebene eines Benutzergeräts zum Daten-Mapping auf Benutzerebene, wobei die Einheit einer höheren Schicht auf Benutzerebene ein Abgleichmodul (30) umfasst,
wobei das Abgleichmodul (30) dazu konfiguriert ist, eine Kennung (ID) einer Dienstqualität (QoS) von einer Nichtzugriffs-Zwischenschichteinheit des Benutzergeräts zu erhalten, wobei die Qos-ID zum Identifizieren eines QoS-Parameters eines Datenpakets verwendet wird, die QoS-ID mit einer gespeicherten Mapping-Regel abzugleichen, wobei die Mapping-Regel eine Mapping-Beziehung zwischen der QoS-ID und einer Einheit einer niedrigeren Schicht auf Benutzerebene des Benutzergeräts aufzeichnet, bei erfolgreichem Abgleichen der QoS-ID mit der gespeicherten Mapping-Regel eine Protokolldateneinheit (PDU), die das Datenpaket enthält, zu erstellen und die erstellte PDU an eine abgeglichene Einheit einer niedrigeren Schicht auf Benutzerebene zu übertragen; und bei erfolglosem Abgleichen der QoS-ID mit der gespeicherten Mapping-Regel die PDU zu erstellen und die erstellte PDU an eine standardmäßige Einheit einer niedrigeren Schicht auf Benutzerebene zu übertragen;
wobei die Einheit einer höheren Schicht auf Benutzerebene eine unabhängige Einheit über einer Einheit des Paketdatenkonvergenzprotokolls (PDCP) ist und die Einheit einer niedrigeren Schicht auf Benutzerebene die PDCP-Einheit ist.

6. Einheit einer höheren Schicht auf Benutzerebene nach Anspruch 5, ferner umfassend: ein Parsing-Modul (10) und ein Bestimmungsmodul (20), wobei
das Parsing-Modul (10) dazu konfiguriert ist, das Datenpaket zu empfangen und ein Datenpaketfilter aus dem Datenpaket zu erhalten; und
das Bestimmungsmodul (20) dazu konfiguriert ist, den QoS-Parameter, der dem Datenpaket entspricht, auf Grundlage des Datenpaketfilters und eines gespeicherten QoS-Richtlinienparameters zu bestimmen und die QoS-ID zum Identifizieren des QoS-Parameters an das Abgleichmodul (30) zu übertragen.

7. Einheit einer höheren Schicht auf Benutzerebene nach Anspruch 6, wobei das Bestimmungsmodul (20) dazu konfiguriert ist, einen QoS-Richtlinienparametersatz zu empfangen und zu sichern; und das Datenpaketfilter mit jedem QoS-Richtlinienparameter in dem QoS-Richtlinienparametersatz abzugleichen, um den auf das Datenpaket angewendeten QoS-Richtlinienparameter zu erhalten.

8. Einheit einer höheren Schicht auf Benutzerebene nach Anspruch 5 oder 6, wobei die PDU mit der QoS-ID durch das Abgleichmodul (30) erstellt wird.

9. Computerlesbares Speichermedium, das computerausführbare Anweisungen speichert, wobei die computerausführbaren Anweisungen verwendet werden, um das Daten-Mapping auf Benutzerebene nach einem der Ansprüche 1 bis 4 auszuführen.

## Revendications

1. Procédé de mappage de données de plan d'utilisateur, comprenant :
l'obtention, par une entité de couche supérieure de plan d'utilisateur d'un équipement utilisateur, d'un identifiant, ID, de qualité de service, QoS, auprès d'une entité de strate de non accès de l'équipement utilisateur, dans lequel l'ID de QoS est utilisé pour identifier un paramètre de QoS d'un paquet de données ;
la mise en concordance, par l'entité de couche supérieure de plan d'utilisateur, de l'ID de QoS avec une règle de mappage stockée, dans lequel la règle de mappage enregistre une relation de mappage entre l'ID de QoS et une entité de couche inférieure de plan d'utilisateur de l'équipement utilisateur ;
lors de la réussite de la mise en concordance de l'ID de QoS avec la règle de mappage stockée, la construction, par l'entité de couche supérieure de plan d'utilisateur, d'une unité de données de protocole, PDU, contenant le paquet de données et la transmission de la PDU construite à une entité de couche inférieure de plan d'utilisateur mise en concordance ; et
lors de l'échec de la mise en concordance de l'ID de QoS avec la règle de mappage stockée, la construction, par l'entité de couche supérieure de plan d'utilisateur, de la PDU et la transmission de la PDU construite à une entité de couche inférieure de plan d'utilisateur par défaut ;
dans lequel l'entité de couche supérieure de plan d'utilisateur est une entité indépendante au-dessus d'une entité de protocole de convergence de données par paquets, PDCP, et l'entité de couche inférieure de plan d'utilisateur est l'entité PDCP.

2. Procédé selon la revendication 1, dans lequel avant l'obtention, par l'entité de couche supérieure de plan d'utilisateur de l'équipement utilisateur, de l'ID de QoS auprès de l'entité de strate de non accès de l'équipement utilisateur, le procédé comprend en outre :
la réception, par l'entité de strate de non accès, du paquet de données, et l'obtention d'un filtre de paquet de données à partir du paquet de données ; et
la détermination, par l'entité de strate de non accès, du paramètre de QoS correspondant au paquet de données sur la base du filtre de paquet de données et d'un paramètre de politique de QoS stocké, et la transmission de l'ID de QoS pour identifier le paramètre de QoS à l'entité de couche supérieure de plan d'utilisateur.

3. Procédé selon la revendication 2, dans lequel la détermination, par l'entité de strate de non accès, du paramètre de QoS correspondant au paquet de données sur la base du filtre de paquet de données et du paramètre de politique de QoS stocké comprend :
la réception et la sauvegarde, par l'entité de strate de non accès, d'un ensemble de paramètres de politique de QoS ; et
la mise en concordance, par l'entité de strate de non accès, du filtre de paquet de données avec chaque paramètre de politique de QoS dans l'ensemble de paramètres de politique de QoS pour obtenir le paramètre de politique de QoS appliqué au paquet de données.

4. Procédé selon la revendication 1 ou 2, dans lequel la PDU est construite avec l'ID de QoS par l'entité de couche supérieure de plan d'utilisateur.

5. Entité de couche supérieure de plan d'utilisateur d'un équipement utilisateur pour mapper des données de plan d'utilisateur, ladite entité de couche supérieure de plan d'utilisateur comprenant un module de mise en concordance (30), dans laquelle le module de mise en concordance (30) est configuré pour obtenir un identifiant, ID, de qualité de service, QoS, auprès d'une entité de strate de non accès de l'équipement utilisateur, dans laquelle l'ID de QoS est utilisé pour identifier un paramètre de QoS d'un paquet de données, mettre en concordance l'ID de QoS avec une règle de mappage stockée, dans laquelle la règle de mappage enregistre une relation de mappage entre l'ID de QoS et une entité de couche inférieure de plan d'utilisateur de l'équipement utilisateur, lors de la réussite de la mise en concordance de l'ID de QoS avec la règle de mappage stockée, construire une unité de données de protocole, PDU, contenant le paquet de données et transmettre la PDU construite à une entité de couche inférieure de plan d'utilisateur ; et lors de l'échec de la mise en concordance de l'ID de QoS avec la règle de mappage stockée, construire la PDU et transmettre la PDU construite à une entité de couche inférieure de plan d'utilisateur par défaut ;
dans laquelle l'entité de couche supérieure de plan d'utilisateur est une entité indépendante au-dessus d'une entité de protocole de convergence de données par paquets, PDCP, et l'entité de couche inférieure de plan d'utilisateur est l'entité PDCP.

6. Entité de couche supérieure de plan d'utilisateur selon la revendication 5, comprenant en outre : un module de parsage (10) et un module de détermination (20), dans laquelle le module de parsage (10) est configuré pour recevoir le paquet de données, et obtenir un filtre de paquet de données à partir du paquet de données ; et
le module de détermination (20) est configuré pour déterminer le paramètre de QoS correspondant au paquet de données sur la base du filtre de paquet de données et d'un paramètre de politique de QoS stocké, et transmettre l'ID de QoS pour identifier le paramètre de QoS au module de mise en concordance (30).

7. Entité de couche supérieure de plan d'utilisateur selon la revendication 6, dans laquelle le module de détermination (20) est configuré pour recevoir et sauvegarder un ensemble de paramètres de politique de QoS ; et mettre en concordance le filtre de paquet de données avec chaque paramètre de politique de QoS dans l'ensemble de paramètres de politique de QoS pour obtenir le paramètre de politique de QoS appliqué au paquet de données.

8. Entité de couche supérieure de plan d'utilisateur selon la revendication 5 ou 6, dans laquelle la PDU est construite avec l'ID de QoS par le module de mise en concordance (30).

9. Support de stockage lisible par ordinateur, stockant des instructions exécutables par ordinateur, dans lequel les instructions exécutables par ordinateur sont utilisées pour exécuter un mappage de données de plan d'utilisateur de l'une quelconque des revendications 1 à 4.
